Europäisches Patentamt

European Patent Office

Office européen des brevets

(11) Publication number: **0 228 025 B1**

## (12) EUROPEAN PATENT SPECIFICATION

(45) Date of publication of patent specification: **17.06.92**

(51) Int. Cl.⁵: **B23P 19/02**, B23C 1/00

(21) Application number: **86117530.5**

(22) Date of filing: **17.12.86**

(54) Method for the non-destructive removal of tubes from heat exchangers and tool useful to that purpose.

(30) Priority: **18.12.85 IT 2326585**

(43) Date of publication of application:
**08.07.87 Bulletin 87/28**

(45) Publication of the grant of the patent:
**17.06.92 Bulletin 92/25**

(84) Designated Contracting States:
**BE DE FR GB NL SE**

(56) References cited:
**DE-C- 924 984**
**US-A- 2 000 824**
**US-A- 2 834 106**
**US-A- 3 729 806**

**SOVIET INVENTIONS ILLUSTRATED, section P/O, week E22, 14th July 1982, class P54, no. G5364 E/22, Derwent Publications Ltd, London, GB**

(73) Proprietor: **ECP ENICHEM POLIMERI S.r.l.**
**16, Piazza della Repubblica**
**I-20124 Milano(IT)**

(72) Inventor: **Stignani, Renato**
**1, P.zza Pescarolo**
**I-46100 Montova(IT)**
Inventor: **Ferrari, Francesco**
**Via S. Bolivar 10**
**I-46030 Virgilio Montova(IT)**

(74) Representative: **Klingseisen, Franz, Dipl.-Ing. et al**
**Patentanwälte Dr. F. Zumstein Dr. E. Assmann Dipl.-Ing. F. Klingseisen Bräuhausstrasse 4**
**W-8000 München 2(DE)**

# Description

The invention relates to a method for the non-destructive removal of tubes from heat exchangers according to the pre-characterising portion of claim 1 and to a tool according to the pre-characterising portion of claim 2.

The pre-characterising portion of Claim 1 is based on the disclosure of the document US-A-2834106. A tool of the type defined in the pre-characterising portion of Claim 2 is known from e.g. US-A-2000824.

US-A-3,729,806 discloses a method and an apparatus for relieving the hoop stresses securing a tube in a tube sheet to allow a removal of the tube therefrom, the hoop stresses being relieved by removing material from the tube to form two axial slots having a radial depth less than the tube wall thickness and depressing the portion of the tube between the slots to break the portion loose from the remainder of the tube to relieve the hoop stresses therein.

US-A-2,834,106 discloses an apparatus for splitting tubes for removing tubes from tube sheets by cutting the tubes longitudinally, collapsing the tube within the tube sheet and thereafter punching or pulling the tube out of its position. The cutter assembly comprises a shank provided with a cutter which is held in its radial position by set screws inserted in the shank. The shank is secured to a cylindrical support by a connecting stud, and the free end of the support can be connected to a pneumatic hammer or other suitable device.

A purpose of the present invention is providing a method for the removal of tubes, or of tube portions, from heat exchangers, which does not require the destruction of the tube length comprised inside the tube plate.

A further purpose of the present invention is providing a tool for carrying out the non-destructive removal of tubes, or of tube portions, from heat exchangers.

This object is achieved by the features in the characterizing part of claims 1 and 2.

Should the tubes of the heat-exchanger be fastened onto the plate, besides by rolling, also by inner and/or outer welding, according to the method of the present invention an initial step must be performed, consisting in the complete destruction of such a weld, by chisel, or by a mechanical means, such as, e.g., by a pneumatic hammer, by a guided anger bit or by a milling cutter, and so on.

The tool can be driven by a normal electrical or pneumatic drill.

The milling-cutter-holder shank can be constituted either by a constant-section metal round, or by two metal rounds having different sections, rigidly connected to each other, and lying on the same axis. The round which is of lower cross-sectional surface area is provided with the blocking means, and on it inserted is the guide sleeve.

The milling-cutter-holder shank constituted by two rounds can be preferably obtained by the lathe-machining of a constant-section metal round.

The two rounds which form the milling-cutter-holder shank have an $L_A/L_B$ ratio - wherein $L_A$ is the length of the lower cross-sectional surface-area round and $L_B$ is the length of the greater cross-sectional surface-area round - comprised within the range of from 0.1 to 1; and a $D_A/D_B$ ratio - wherein $D_A$ is the diameter of the lower cross-sectional surface-area round and $D_B$ is the diameter of the greater cross-sectional surface-area round, comprised within the range of frog 0.1 to 1.

When the $D_A/D_B$ ratio is equal to 1, the tool of the present invention is provided on the milling-cutter-holder shank with a shoulder, to the purpose of preventing the guide sleeve from sliding. The milling-cutter-holder shank is generally constituted by carbon steels, with a carbon content comprised within the range of from 0.02 to 1.5% by weight; other metals, such as stainless steels, or special alloy steels or non ferrous metal alloys can be used as well.

The guide sleeve has an outer diameter slightly shorter than the inner diameter of the tube which has to be removed from the heat exchanger, but longer than the diameter of the milling-cutter-holder shank.

Said sleeve can be of any length, even if having a length about equal to that of the lower cross-sectional surface-area round is preferred.

The opening in the guide sleeve can be provided in any part thereof, on condition that it coincides, when the sleeve is inserted on the milling-cutter-holder shank, with the blocking means.

In said opening inserted is the milling-cutter-shank, the teeth of which protrude by a length equal to the thickness of the tube to be extracted.

The offset of the longitudinal bore of the guide sleeve relatively to its own axis is equal to the thickness of the tube if the diameter of the milling cutter is identical to that of the same sleeve, or is equal to the thickness of the tube, increased by the difference of diameters, if the milling cutter has a diameter lower than that of the sleeve.

The guide sleeve can be also constituted by any types of metals or of metal alloys, even if bronze is the most preferred one.

The milling cutter can be of steel or of other metal alloys.

To the purpose of better understanding the tool of the instant invention, hereunder a description of a preferred embodiment of the tool in greater detail is given, referring to the figures of the attached drawing, wherein:

- Fig 1 shows a perspective schematic exploded view of the tool of the present invention;
- Fig. 2 shows a perspective schematic view of the tool in its operating position inside the tube to be removed;
- Fig. 3 shows a longitudinal sectional view of the tool in its operating position inside the tube; and
- Fig. 4 shows a transversal sectional view of Fig. 3, carried out by a plane passing along AA.

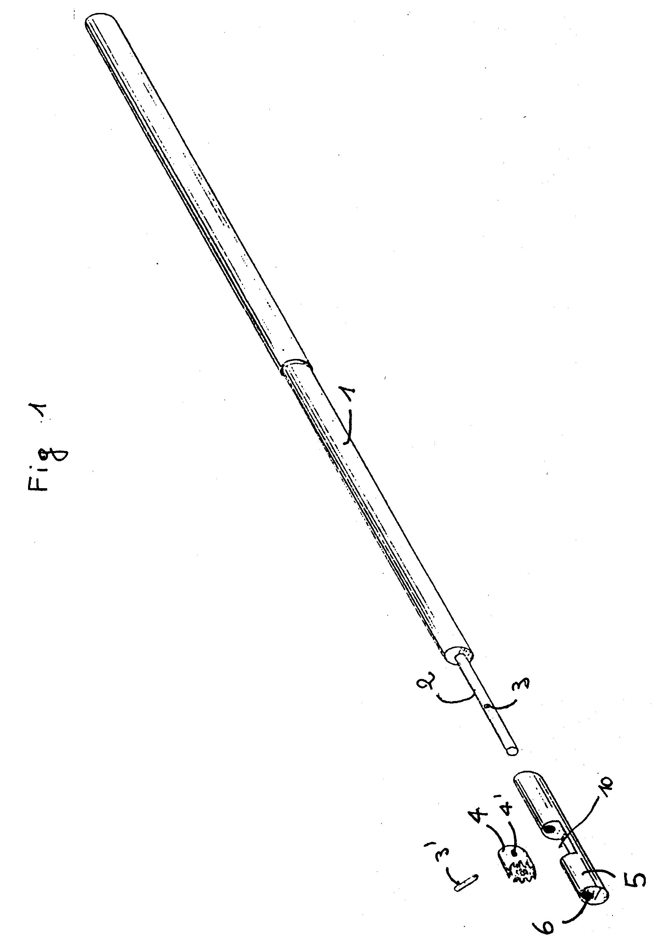

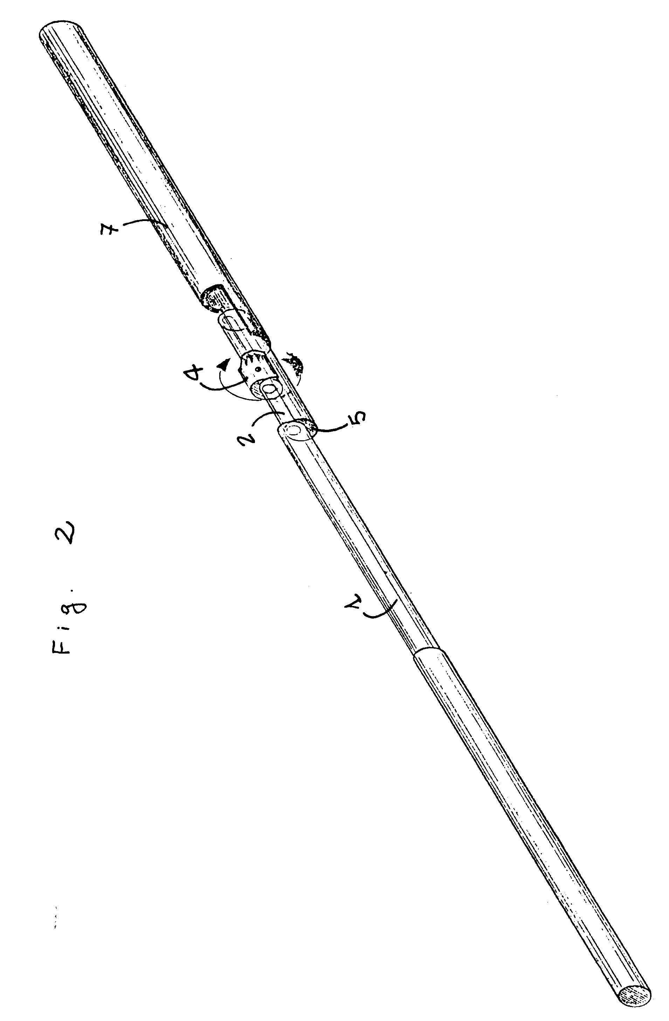

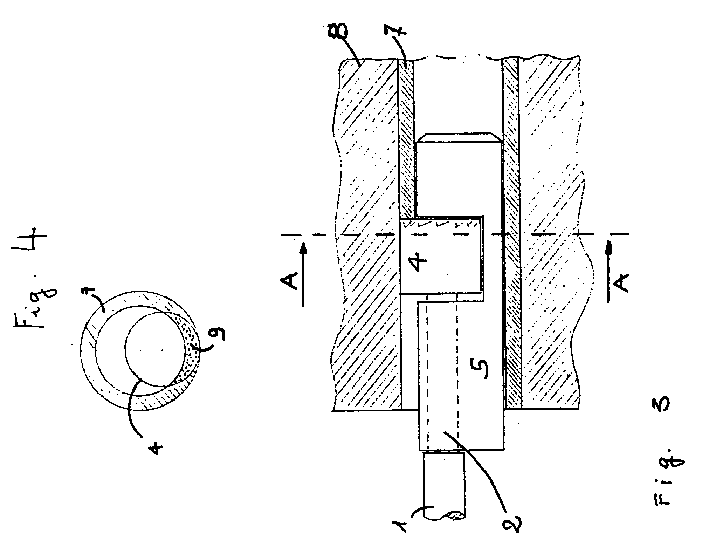

Referring to the figures, the tool of the present invention comprises:
- a milling-cutter-holder shank constituted by a round of greater cross-sectional surface area 1, which is applied to the operating machine;
- a round of lower cross-sectional surface area 2, provided with blocking means 3 and 3';
- a guide sleeve 5 provided with an opening (10) and with a longitudinal bore 6; and
- an end milling cutter 4, provided with a bore 4' for the rigid connection to the milling-cutter-holder shank.

The milling cutter 4 is housed inside the opening 10 of the guide sleeve 5, and the whole assembly is applied on round 2.

Whilst the sleeve remains free, the milling cutter is rigidly blocked onto the round by means of pin 3', which is inserted inside the two bores 3 and 4.

The longitudinal bore 6 of the guide sleeve, by being offset relatively to the axis by a length at least equal to the thickness of tube 7 fastened to the tube plate 8, allows the teeth of milling cutter 4 to protrude by a length identical to its offset and to grind the tube according to the intersection 9.

During the operation of the tool, the milling-cutter-holder shank is connected to an operating machine, such as, e.g., a drill, and the milling-cutter-housing guide sleeve is slid inside the tube.

On actuating the drill, the milling cutter, which operates on its end, removes a portion of the tube, and the guide sleeve, by being not constrained to the milling-cutter-holder shank, does not rotate and allows the milling cutter to wear away a straight length of tube.

## Claims

1. Method for the non-destructive removal of tubes or of portions of tubes from heat exchangers, comprising:
   the lengthwise cutting along at least one generatrix of one tubs or of a plurality of tubes of said exchanger, to a depth at least equal to the thickness of the tube plate the approaching to each other of the edges of the so-obtained cut section up to the complete release of the tube, or of the tubes, from the tube plate;
   the possible crossways cutting of the tube, or of the tubes, to a height at least equal to the double of the thickness of the tube plate;
   characterized in that
   the lengthwise cutting is carried out to a width of up to 2% of the outer perimeter of the tubes by a tool

2. Tool for the non-destructive removal of tubes, or of tube portions, from heat exchangers, according to the method of claim 1, comprising a milling-cutter-holder shank (1,2), a guide sleeve (5) and an end milling-cutter (4), characterized in that:
   a) the milling-cutter-holder shank (1,2) is at least equal in length to the depth of the cutting to be accomplished in the tube (7) and is provided with a blocking means (3,3'),
   b) the guide sleeve (5) is constituted by a cylinder provided with a longitudinal bore (6), inserted, without any rigid connections, on the milling-cutter-holder shank (1,2) and is provided with an opening (10) for housing the milling cutter (4), said longitudinal bore (6) being offset relatively to the axis by a length at least equal to the thickness of the tube (7) to be removed; and
   c) the end milling cutter (4) is housed inside the opening (10) of the guide sleeve (5), and rigidly fixed on the milling-cutter-holder shank (1,2)
   comprising:
   a) a milling-cutter-holder shank (12), at least equal in length to the depth of the cutting to be accomplished in the tube (7), and provided with a blocking means (3,8'),
   b) a guide sleeve (5) constituted by a cylinder provided with a longitudinal bore (6), inserted, without any rigid connections, on the milling-cutter-holder shank (1), and provided with an opening (10) for housing a milling cutter (4), said longitudinal bore (6) being offset relatively to the axis by a length at least equal to the thickness of the tube (7) to be removed; and
   c) an end milling cutter (4) housed inside the opening (10) of the guide sleeve (5), and rigidly fixed on the milling-cutter-holder shank (1,2).

3. Tool according to claim 2, wherein the milling-cutter-holder shank (1,2) is constituted by a constant-section metal round.

4. Tool according to claim 2, wherein the milling-cutter-holder shank (1,2) is constituted by two metal rounds having different cross-sectional surface areas, rigidly connected to each other and lying on the same axis.

5. Tool according to claim 4, wherein the round of lower cross-sectional surface area (2) is provided with the blocking means (3,3'), and on said round the guide sleeve is inserted.

6. Tool according to claim 4 or 5, wherein the milling-cutter-holder shank (1,2) is obtained by lathe-machining of a constant-section metal round.

7. Tool according to any of claims from 4 to 6, wherein the $L_A/L_B$ ratio - wherein $L_A$ is the length of the round with lower cross-sectional surface area (2) and $L_B$ is the length of the round with greater cross-sectional surface area (1) - is comprised within the range of from 0.1 to 1.

8. Tool according to any of claims from 4 to 6, wherein the $D_A/D_B$ ratio - wherein $D_A$ is the diameter of the round with lower cross-sectional surface area (2) and $D_B$ is the diameter of the round with greater cross-sectional surface area (1) - is comprised within the range of from 0.1 to 1.

9. Tool according to claim 8, wherein, when the $D_A/D_B$ ratio, is equal to 1, the milling-cutter-holder shank (1,2) is provided with a shoulder to the purpose of preventing the guide sleeve (5) from sliding.

10. Tool according to any of claims from 2 to 9, wherein the guide sleeve (6) has an outer diameter slightly shorter than the inner diameter of the tube (7) to be removed, and longer than the diameter of the milling-cutter-holder shank (1,2).

11. Tool according to any of claims from 4 to 9, wherein the guide sleeve (5) has a length preferably equal to the length of the round having the lower cross-sectional surface area (2).

12. Tool according to any of claims from 2 to 11, wherein the opening (10) of the guide sleeve (5) coincides, when the sleeve is applied on the milling-cutter-holder shank (1,2), with the blocking means (3,3').

13. Tool according to any of claims from 2 to 12, wherein the offset of the longitudinal bore (6) of the guide sleeve (5) relatively to its own axis is equal to the thickness of the tube (7) if the diameter of the milling cutter (4) is identical to that of the sleeve, or is equal to the tube thickness increased by the difference of diameters if the milling cutter (4) has a diameter lower that that of the sleeve (5).

**Revendications**

1. Un procédé d'enlèvement non-destructif de tubes ou de parties tubulaires des échangeurs de chaleur, comprenant:
   - la coupe longitudinale, le long d'au moins une génératrice d'un tube ou d'une pluralité de tubes dudit échangeur, jusqu'à une profondeur au moins égale à l'épaisseur de la plaque tubulaire et sur une largeur égale à 2% maximum du périmètre extérieur des tubes;
   - la progression vers chacun des bords de la section ainsi usinée jusqu'au dégagement total du tube ou de l'un des tubes de la plaque tubulaire;
   - la coupe transversale éventuelle du tube ou des tubes jusqu'à une hauteur au moins égale au double de l'épaisseur de la plaque tubulaire;

   caractérisé en ce que la coupe longitudinale est exécutée jusqu'à une largeur égale au maximum à 2% du périmètre extérieur des tubes par un outil comprenant:
   a) un manche porte-fraise (1, 2) d'une longueur au moins égale à la profondeur de coupe à effectuer dans le tube (7), et pourvu de moyens de serrage (3, 3');
   b) un manchon de guidage (5) constitué par un cylindre pourvu d'un alésage longitudinal (6), introduit sans aucun assemblage rigide, sur le manche porte-fraise (1) et pourvu d'une ouverture (10) de réception d'une fraise (4), ledit alésage longitudinal (6) étant décentré par rapport à l'axe d'une longueur au moins égale à l'épaisseur du tube (7) à enlever; et
   c) une fraise en bout (4) logée à l'intérieur de l'ouverture (19) du manchon de guidage (5), et fixée rigidement sur le manche porte-fraise (1, 2).

2. Outil d'enlèvement par un procédé non-destructif des tubes ou parties tubulaires des échangeurs de chaleur selon le procédé de la revendication 1, comprenant un manche porte-fraise (1, 2), un manchon de guidage (5) et une fraise en bout (4), caractérisé en ce que:
   a) le manche porte-fraise (1, 2) a une longueur au moins égale à la profondeur de coupe à effectuer dans le tube (7), et qu'il est pourvu de moyens de serrage (3, 3'),

b) le manchon de guidage (5) est constitué par un cylindre pourvu d'un alésage longitudinal (6), introduit sans aucun assemblage rigide, sur le manche porte-fraise (1, 2) et pourvu d'une ouverture (10) de réception de fraise (4), ledit alésage longitudinal (6) étant décentré par rapport à l'axe d'une longueur au moins égale à l'épaisseur du tube (7) à enlever, et

c) que la fraise en bout (4) est logée à l'intérieur de l'ouverture (10) du manchon de guidage (5), et fixée rigidement sur le manche porte-fraise (1, 2).

3. Outil selon la revendication 2, dans lequel le manche porte-fraise (1, 2) est constitué par une tige métallique ronde de section constante.

4. Outil selon la revendication 2, dans lequel le manche porte-fraise (1, 2) est constitué par deux tiges métalliques rondes de sections différentes en coupe transversale, reliées rigidement entre elles et situées sur le même axe.

5. Outil selon la revendication 4, dans lequel la tige ronde (2) de section plus petite en coupe transversale est pourvue de moyens de serrage (3, 3') et que le manchon de guidage (5) est monté autour de ladite tige ronde.

6. Outil selon la revendication 4 ou 5, dans lequel la tige porte-fraise (1, 2) est réalisée par tournage d'une tige métallique ronde de section constante.

7. Outil selon l'une quelconque des revendications 4 à 6, dans lequel le rapport $L_A / L_B$, où $L_A$ est la longueur de la tige ronde (2) de section inférieure en coupe transversale et $L_B$ est la longueur de la tige ronde (1) de section supérieure en coupe transversale, est compris dans la gamme de 0,1 à 1.

8. Outil selon l'une quelconque des revendications 4 à 6, dans lequel le rapport $D_A / D_B$, où $D_A$ est le diamètre de la tige ronde (2) de section inférieure en coupe transversale et $D_B$ est le diamètre de la tige ronde (1) de section supérieure en coupe transversale, est compris dans la gamme de 0,1 à 1.

9. Outil selon la revendication 8 dans lequel, lorsque le rapport $D_A /D_B$ est égal à 1, la tige porte-fraise (1, 2) est pourvue d'un épaulement pour empêcher le glissement du manchon de guidage (5).

10. Outil selon l'une quelconque des revendications 2 à 9, dans lequel le manchon de guidage (5) a un diamètre extérieur légèrement inférieur au diamètre intérieur du tube (7) à enlever et supérieur au diamètre de la tige porte-fraise (1, 2).

11. Outil selon l'une quelconque des revendications 4 à 9, dans lequel le manchon (5) a une longueur, de préférence, égale à la longueur de la tige ronde (2) ayant la plus faible section en coupe transversale.

12. Outil selon l'une quelconque des revendications 2 à 11, dans lequel l'ouverture (10) du manchon de guidage (5) coïncide avec les moyens de serrage (3, 3') lorsque le manchon est monté sur le manche porte-fraise (1, 2).

13. Outil selon l'une quelconque des revendications 2 à 12, dans lequel le décentrage de l'alésage longitudinal (6) du manchon de guidage (5) par rapport à son propre axe est égal à l'épaisseur du tube (7) si le diamètre de la fraise (4) est identique à celui du manchon, ou est égal à l'épaisseur du tube augmentée de la différence entre les diamètres si le diamètre de la fraise (4) est inférieur à celui du manchon (5).

**Patentansprüche**

1. Verfahren für die zerstörungsfreie Entfernung von Rohren oder Abschnitten von Rohren aus Wärmetauschern, umfassend:

längsweises Schneiden längs wenigstens einer Mantellinie eines Rohres oder einer Anzahl von Rohren des Wärmetauschers bis zu einer Tiefe von wenigstens gleich der Stärke der Rohrplatte,

zueinander Annähern der Kanten der so erhaltenen Schnittabschnitte bis zu der völligen Lösung des Rohres oder der Rohre aus der Rohrplatte,

mögliches Schneiden des Rohres in Querrichtung oder der Rohre bis zu einer Höhe wenigstens gleich dem Doppelten der Stärke der Rohrplatte,

**dadurch gekennzeichnet**,

daß das längsweise Schneiden bis zu einer Breite von bis zu 2 % des Außenumfanges des Rohres durch ein Werkzeug ausgeführt wird, umfassend

a) einen Mahlschneidehalteschaft (1,2), dessen Länge wenigstens gleich der Tiefe des in dem Rohr (7) auszuführenden Schneidevorgangs ist, und der mit einer Blockiereinrichtung (3, 3') versehen ist,

b) eine Führungsbüchse (5), ausgebildet durch einen Zylinder, der mit einer länglichen Bohrung (6) versehen ist, eingefügt ohne einer festen Verbindung auf den Mahlschneidehalteschaft (1) und mit einer Öffnung (10) versehen, zum Aufnehmen eines Mahlschneiders (4), wobei die Längsbohrung (6) bezüglich zu der Achse durch eine Länge wenigstens gleich der Stärke des zu entfernenden Rohres (7) versetzt ist; und

c) ein Endmahlschneider (4), der innerhalb der Öffnung (10) der Führungsbuchse (5) angeordnet ist und fest auf den Mahlschneidehalteschaft (1,2) befestigt ist.

2. Werkzeug für die zerstörungsfreie Entfernung von Rohren oder von Rohrabschnitten aus Wärmetauschern gemäß dem Verfahren nach Anspruch 1, umfassend einen Mahlschneidehalteschaft (1,2), eine Führungsbuchse (5) und einen Endmahlschneider (4),

dadurch gekennzeichnet, daß:

a) der Mahlschneidehalteschaft (1,2) in der Länge wenigstens gleich der Tiefe des auszuführenden Schneidevorgangs in dem Rohr (7) ist und mit einer Blockiereinrichtung (3,3') versehen ist,

b) die Führungsbüchse (5) durch einen Zylinder ausgebildet ist, versehen mit einer Längsbohrung (6), eingeführt ohne einer fe-sten Verbindung auf den Mahlschneidehal-teschaft (1,2) und mit einer Öffnung (10) zum Aufnehmen des Mahlschneiders (4) versehen, wobei die Längsbohrung (6) bezüglich der Achse um eine Länge wenigstens gleich der Stärke des zu entfernenden Rohres (7) versetzt ist, und

c) der Endmahlschneider (4) innerhalb der Öffnung (10) der Führungsbuchse (5) angeordnet ist und starr auf den Mahlschneidehalteschaft (1,2) befestigt ist.

3. Werkzeug nach Anspruch 2,

wobei der Mahlschneidehalteschaft (1,2) durch ein Rundmetall mit konstantem Querschnitt ausgebildet ist.

4. Werkzeug nach Anspruch 2,

wobei der Mahlschneidehalteschaft (1,2) durch zwei Rundmetalle ausgebildet ist mit unter-schiedlichen Querschnittsflächen, die starr mit-einander verbunden sind und auf derselben Achse liegen.

5. Werkzeug nach Anspruch 4,

wobei das Rundelement mit der geringeren Querschnittsfläche (2) mit der Blockiereinrichtung (3,3') versehen ist und auf dem Rundelement die Führungsbuchse (5) aufgesetzt ist.

6. Werkzeug nach Anspruch 4 oder 5,

wobei der Mahlschneidehalteschaft (1,2) durch Bearbeitung eines Rundmetalls mit konstantem Querschnitt auf einer Drehbank erhalten wird.

7. Werkzeug nach einem der Ansprüche 4 bis 6,

wobei das $L_A/L_B$ Verhältnis - wobei $L_A$ die Länge des Rundelementes mit der geringeren Querschnittsfläche (2) und $L_B$ die Länge des Rundelementes mit der größeren Querschnittsfläche (1) ist - in dem Bereich von 0,1 bis 1 enthalten ist.

8. Werkzeug nach einem der Ansprüche 4 bis 6,

wobei das $D_A/D_B$ Verhältnis - wobei $D_A$ der Durchmesser des Rundelementes mit geringerer Querschnittsfläche (2) ist und $D_B$ der Durchmesser des Rundelementes mit größerer Querschnittsfläche (1) - in dem Bereich von 0,1 bis 1 enthalten ist.

9. Werkzeug nach Anspruch 8,

wobei, wenn das $D_A/D_B$-Verhältnis gleich 1 ist, der Mahlschneidehalteschaft (1, 2) mit einer Schulter für den Zweck zum Verhindern eines Gleitens der Führungsbuchse (5) versehen ist.

10. Werkzeug nach einem der Ansprüche 2 bis 9,

wobei die Führungsbuchse (5) einen äußeren Durchmesser ein wenig kleiner als der innere Durchmesser des zu entfernenden Rohres (7) und größer als der Durchmesser des Mahlschneidehalteschafts (1,2) hat.

11. Werkzeug nach einem der Ansprüche 4 bis 9,

wobei die Führungsbuchse (5) eine Länge von vorzugsweise gleich der Länge des Rundelementes mit der kleineren Querschnittsfläche (2) hat.

12. Werkzeug nach einem der Ansprüche 2 bis 11,

wobei die Öffnung (10) der Führungsbuchse (5) sich mit der Blockiereinrichtung (3,3') deckt, wenn die Buchse auf dem Mahlschneidehalteschaft (1,2) verwendet wird.

13. Werkzeug nach einem der Ansprüche 2 bis 12,

wobei der Versatz der Längsbohrung (6) der Führungsbuchse (5) bezüglich zu seiner eigenen Achse gleich der Stärke des Rohres (7) ist, wenn der Durchmesser des Mahlschneiders (4) identisch zu dem der Buchse ist, oder gleich der Stärke des Rohres ist, die um den Unterschied der Durchmesser erhöht ist, wenn der Mahlschneider (4) einen Durchmesser geringer als den der Buchse (5) hat.

Fig. 1

Fig. 2

Fig. 4

Fig. 3